# EUROPÄISCHE PATENTSCHRIFT

(11) **EP 1 475 486 B1**
(45) Veröffentlichungstag und Bekanntmachung des Hinweises auf die Patenterteilung: **04.04.2007**
(21) Anmeldenummer: 04009412.0
(22) Anmeldetag: 21.04.2004
(51) Int. Cl.: E04B 1/80

(54) **Vakuumisolationspaneel**
vacuum insulation panel
Panneau d'isolation sous vide

(30) Priorität: 08.05.2003 DE 10320630
(43) Veröffentlichungstag der Anmeldung: 10.11.2004
(73) Patentinhaber: Wacker Chemie AG, 81737 München (DE)
(72) Erfinder: Eyhorn, Thomas, 87452 Altusried (DE); Henn, Dieter, 87448 Waltenhofen (DE); Stuhler, Hubert, 87477 Sulzberg (DE); Klaus, Johann, 87477 Sulzberg (DE)
(74) Vertreter: Fiener, Josef

(56) Entgegenhaltungen:
- DE-A- 10 015 876

## Beschreibung

Die Erfindung betrifft ein Vakuumisolationspaneel (VIP) mit den oberbegrifflichen Merkmalen des Anspruches 1, wie sie in der DE-A-100 15 876 gezeigt sind.

Die Wärmeleitzahl von Dämmplatten lässt sich drastisch reduzieren, wenn im System ein Vakuum vorliegt. Dies ist z.B. aus US 5,950,450 oder DE 4339435 bekannt. Eine kostengünstige Lösung zur Herstellung eines solchen VIPs beinhaltet eine mikroporöse Wärmedämmplatte, welche in eine Verbundfolie vakuumdicht eingeschweißt wird. Als Verbundfolie dient dabei entweder ein vorgefertigter Folienbeutel, meist ein Siegelrandbeutel, oder zwei Folienzuschnitte, welche dem Prozess zugeführt werden. Bei beiden Herstellungsvarianten bleibt nach dem Evakuieren am VIP ein mittiger Folienüberstand durch die Schweißnähte bzw. durch einen Plattenschwund. Dieser Folienüberstand stört beim Zusammensetzen der VIPs zu isolierenden Umhullungen wie z.B. Transportboxen, da sich die Wärmedämmplatten nicht lückenfrei aneinanderlegen lassen und es somit zu Wärmebrucken kommt, die die ansonsten hervorragende Isolationswirkung mindern. Dies gilt auch für die eingangs genannte DE-A-100 15 876.

Zur Lösung dieses Problems schlägt DE 10058566 (va-Q-tec) vor, den Folienüberstand durch eine Falttechnik wegzuklappen. Dies ist großtechnisch eine aufwendige und damit teure Lösung.

Eine andere Möglichkeit den störenden Einfluss der Überstande zu eliminieren besteht darin, beim Zusammenbau einer isolierenden Umhüllung die einzelnen Platten mittels Steckverbindungen aus nicht evakuierten Dämmmaterialien zusammenzufügen. Dies wird in DE 100 58 565 (va-Q-tec) vorgeschlagen.

Bekannt ist ferner ein kostenintensives Verfahren, bei dem eine vakuumisolierte Platte in eine tiefgezogene Mehrschichtfolie eingelegt wird und mit einer ebenen Folie gasdicht verschlossen wird. Dadurch liegt der Folienüberstand immer am äußeren Rand des Paneels. Dieses Verfahren ist auf Grund der tiefgezogenen Folien sehr kostenintensiv und bezogen auf unterschiedliche Geometrien sehr unflexibel. Da Folien, die Metallschichten enthalten, nicht tiefgezogen werden können, sind tiefgezogene Mehrschichtfolien frei von Metallschichten.

Aufgabe der vorliegenden Erfindung ist, einen plattenformigen, evakuierten und wärmedämmenden Formkörper (Vakuumisolationspaneel) zur Verfügung zu stellen, welcher preisgünstig herzustellen ist und welcher die beschriebenen Nachteile beim Zusammenfugen mehrerer Vakuumisolationspaneele zu einer isolierenden Umhüllung nicht aufweist.

Die Aufgabe wird dadurch gelöst, dass sie ein lückenfreies Zusammensetzen der Vakuumisolationspaneele zu einer isolierenden Umhüllung ermöglicht, wobei sie sich oberhalb oder unterhalb der Mitte der Schmalseite der Wärmedämmplatte befindet. Vorzugsweise ist ein solches VIP zudem dadurch gekennzeichnet, dass die Wärmedämmplatte am Übergang von Ober- bzw. Unterseite zur Schmalseite eine Kante mit einem Winkel von 10° bis 70° in Kombination mit einem Winkel von 170° bis 110° aufweist. Besonders bevorzugt ist ein Winkel von 45° in Kombination mit einem Winkel von 135°.

Bei der Wärmedämmplatte handelt es sich beispielsweise um einen offenporigen, organischen und anorganischen Schaum, ein Fasermaterial oder vorzugsweise um Platten aus mikroporösem Isoliermaterial, wie es z.B. aus DE- 4432896, US-5911903, EP-B-0937939, EP-B-1004358 oder EP-A-1304315 bekannt ist. Besonders bevorzugt handelt es sich um Mischungen enthaltend pyrogene Kieselsäure, insbesondere bevorzugt pyrogene Kieselsäuren mit einer BET > 100m²/g. Die Plattendichte liegt vorzugsweise bei > 80 kg/m³ (bis 300 kg /m³).

Bei der metallhaltigen Folie handelt es sich vorzugsweise um eine Verbundfolie mit einer oder mehreren metallisierten Schichten oder um eine Verbundfolie mit einer Schicht aus Metall, vorzugsweise Aluminium.

Die Erfindung betrifft ferner ein Verfahren zur Herstellung eines erfindungsgemäßen Paneels, bei dem eine Wärmedämmplatte mit einer flächigen Ober- und Unterseite und einer Schmalseite in eine gasdichte Apparatur zwischen zwei Folienzuschnitte gegeben wird, bei Drücken von 0,05 - 100 mbar evakuiert wird und die Folienzuschnitte allseitig miteinander versiegelt werden, oder in eine gasdichte Apparatur in einen aus einer Ober- und Unterfolie vorgefertigten Folienbeutel mit mindestens einer offenen Seite eingeschoben wird und der Folienbeutel anschließend bei Drücken von 0,05 - 100 mbar evakuiert und an der offenen Seite gasdicht versiegelt wird, dadurch gekennzeichnet, dass die Wärmedämmplatte mit einer Schräge an der Schmalseite versehen wird und sich dadurch die Umfangslänge der Wärmedämmplatte einseitig derart ändert, dass der Folienüberstand nach dem Verschweißen der Folie oberhalb oder unterhalb der Mitte der Schmalseite liegt.

Die Folienzuschnitte weisen vorzugsweise eine gleiche Größe auf. Aus Kostengründen ebenso bevorzugt hat der Folienbeutel an der offenen Seite eine gleich lange Ober und Unterseite. Durch die unterschiedliche Umfangslänge der Platte ergibt sich zwangsläufig eine nicht mittige Schweißnaht.

Der Folienüberstand ist durch diese Änderungen der Form der Wärmedämmplatte somit gezielt positionierbar. Bei herkömmlichen Platten mit rechtwinkligen Kanten liegt der Folienüberstand dagegen immer in der Mitte der Schmalseite, wenn eine preiswerte Folie verwendet wird. Dies gilt nicht für tiefgezogene Folien, die allerdings, wie bereits ausgeführt, aufgrund ihres hohen Preises für eine kostengünstige Losung nicht in Frage kommen. Tiefgezogene Folien sind im Gegensatz zu den erfindungsgemäß eingesetzten Folien nicht metallhaltig.

Als alternative Möglichkeit eine nichtmittige Positionierung des Folienüberstandes zu erreichen, ist es, eine der beiden Folienseiten derart zu gestalten, dass sie länger ist, als die andere Folienseite. Da eine derartig Gestaltung der Folien oder des Folienbeutels allerdings sehr kostenintensiv ist, ist eine derartige Ausführung nicht bevorzugt.

Das erfindungsgemäße Verfahren erlaubt die Verwendung preiswerter Folien in Form eines Beutels oder als Folienzuschnitt, wobei der Folienüberstand an der Schweißnaht gezielt dahin positioniert werden kann, wo er nicht stört. Die aus dem Stand der Technik bekannten aufwendigen Umfaltmaßnahmen oder Steckverbindungen sind damit nicht mehr notwendig.

Das Anbringen der Schrägen an der Schmalseite der Platte ist weitaus kostensparender möglich als andere Maßnahmen. Die Anbringung der Schrägen erfolgt vorzugsweise durch eine mechanische Bearbeitung einer herkömmlichen Platte oder durch Presswerkzeuge beim Pressen der Platte.

Ein weiterer Vorteil der erfindungsgemäßen Platten mit schräger Schmalseite ist es, dass sich die Maßtoleranzen, wie sie sich bei der Herstellung von VIPs generell kaum vermeiden lassen, nicht negativ auswirken, wenn die VIPs zu flächigen Anwendungen wie Fassadenelementen oder Fußböden aneinandergelegt werden oder zu Behältern aufgebaut werden. Diese Maßtoleranzen führen bei herkömmlichen VIPs zu unerwünschten Spalten und damit Wärmebrücken zwischen den Platten.

Die Erfindung betrifft somit auch Behälter wie Transportbehälter, oder Kühlschranke, oder flächige Anwendungen wie Fassadenelemente, oder Fußboden, die dadurch gekennzeichnet sind, dass sie fugenfrei aneinandergefügte, erfindungsgemaße VIPs enthalten.

Die Erfindung betrifft ferner die Verwendung der erfindungsgemaßen Formkörper in Transportbehältern, Kühlschränken und flächigen Anwendungen wie Fassadenelementen oder Fußböden.

Die erfindungsgemäßen VIPs eignen sich generell zum Einsatz überall dort, wo ein Folienüberstand am VIP stört. Beispiele dafür sind Transportboxen mit hochwirksamer Wärmedämmung, ebene Fassadenelemente, bestehend aus einer oder mehreren Platten, flächige Aufbauten wie Wand und Boden von z.B. Kühlhausern, oder Gebäude, wobei mindestens zwei Platten zum Einsatz kommen, welche spiegelbildlich eingebaut werden.

Fig. 1 und 2 zeigen ein erfindungsgmäßes VIP im Querschnitt sowie eine Platte in einer Aufsicht in Richtung II auf Fig. 1.

Fig. 3 zeigt eine perspektivische Darstellung eines erfindungsgemäßen VIP.

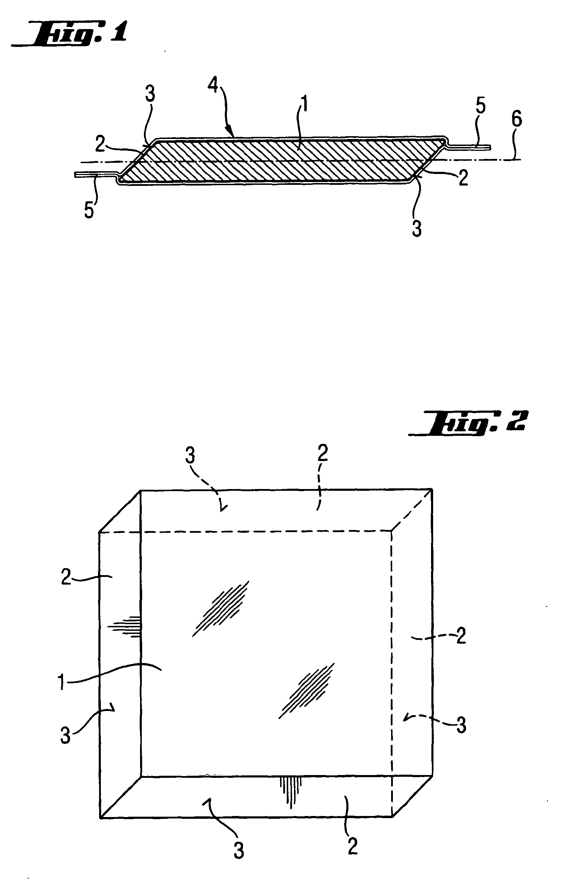

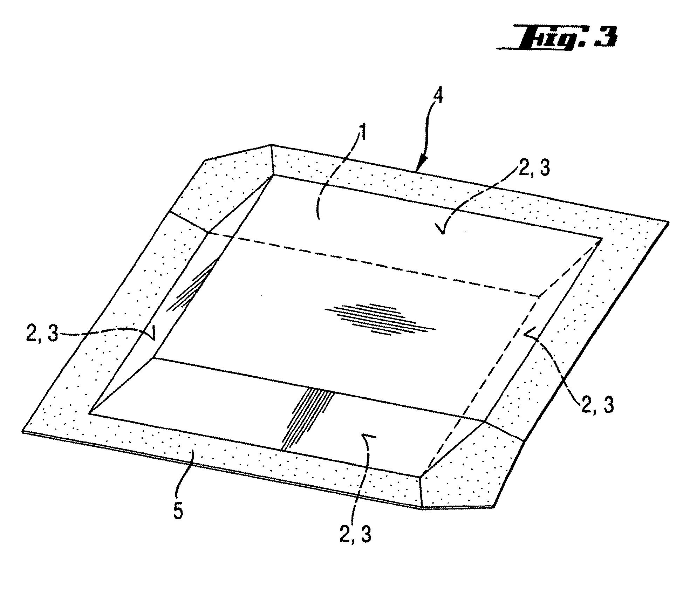

Das folgende Beispiel dient der weiteren Erläuterung der Erfindung.

### Beispiel 1:

Eine Platte 1 aus einem mikroporösen wärmedämmenden Isöliermaterial erhältlich unter der Bezeichnung Wacker WDS SiC NT bei der Firma Wacker-Chemie GmbH, München, mit den Maßen 400 x 400 x 20 mm, wird an den Schmalseiten 2 durch eine mechanische Bearbeitung so mit einer 45° Schräge 3 versehen, dass es die Form eines Parallelflachs hat. Diese Platte 1 wird nach einer Trocknung bei 120°C über 45 Minuten in einen Flachbeutel 4 (Siegelrandbeutel) aus einer metallisierten Hochbarrierefolie mit den Maßen 440 x 480 mm erhältlich unter der Bezeichnung V08621 bei der Firma Hanita, Israel, eingeschoben und bei einem Druck < 5 mbar gasdicht auf der Schmalseite 2 der Platte 1 versiegelt. Das Versiegeln erfolgt dabei mit einer herkommlichen Verpackungsmaschine zwischen zwei beheizten Schweißbalken bei einer Temperatur > 90 °C. Der Folienüberstand 5 der so erhaltenen Platte befindet sich 8 mm außerhalb der Mitte 6 der Schmalseite.

## Patentansprüche

1. Vakuumisolationspaneel, umfassend eine Wärmedämmplatte (1) mit einer flächigen Ober- und Unterseite und je einer Schmalseite (2) in einer Umhüllung (4), bestehend aus einer metallhaltigen Folie, wobei in der Umhüllung ein Unterdruck herrscht und die Umhüllung die Wärmedämmplatte (1) vakuumdicht umschließt und die Umhüllung (4) auf der Schmalseite (2) eine Schweißnaht (5) mit einem Folienüberstand aufweist und die Schmalseiten angeschrägt sind und das Vakuumisolationspaneel die Form eines Parallelflaches hat , **dadurch gekennzeichnet, dass** die Schweißnaht (5) mit Folienüberstand derart angeordnet ist, dass sie ein lückenfreies Zusammensetzen der Vakuumisolationspaneele zu einer isolierenden Umhüllung ermöglicht, wobei sie sich oberhalb oder unterhalb der Mitte (6) der Schmalseite (2) der Wärmedämmplatte (1) befindet.

2. Vakuumisolationspaneel gemäß Anspruch 1, **dadurch gekennzeichnet, dass** der Übergang von Ober- bzw. Unterseite zur jeweiligen Schmalseite (2) eine Kante mit einem Winkel von 10° bis 70° in Kombination mit einem Winkel von 170° bis 110°, besonders bevorzugt ein Winkel von 45° in Kombination mit einem Winkel von 135°, aufweist.

3. Vakuumisolationspaneel gemäß Anspruch 2, **dadurch gekennzeichnet, dass** die Wärmedämmplatte (1) aus einem offenporigen organischen und anorganischen Schaum, einem Fasermaterial oder vorzugsweise einem mikroporösen Isoliermaterial besteht.

4. Vakuumisolationspaneel gemäß einem der Ansprüche 1 bis 3, **dadurch gekennzeichnet, dass** die metallhaltige Folie eine Verbundfolie mit einer oder mehreren metallisierten Schichten oder eine Verbundfolie mit einer Schicht aus Metall, vorzugsweise Aluminium, ist.

5. Behälter oder flächige-Anwendung, die **dadurch gekennzeichnet ist, dass** sie fugenfrei aneinandergefügte Vakuumisolationspaneele gemäß einem der Ansprüche 1 bis 4 enthält.

6. Verfahren zur Herstellung eines Vakuumisolationspaneels gemäß einem der Ansprüche 1 bis 4, bei dem eine Wärmedämmplatte (1) mit einer flächigen Ober- und Unterseite und je einer Schmalseite in eine gasdichte Apparatur zwischen zwei Folienzuschnitte gegeben wird, bei Drücken von 0,05 - 100 mbar evakuiert wird, und die Folienzuschnitte allseitig miteinander versiegelt werden, oder in eine gasdichte Apparatur in einen aus einer Ober- und Unterfolie vorgefertigten Folienbeutel mit mindestens einer offenen Seite eingeschoben wird und der Folienbeutel anschließend bei Drücken von 0,05 - 100 mbar evakuiert und an der offenen Seite gasdicht versiegelt wird, **dadurch gekennzeichnet, dass** die Wärmedämmplatte (1) mit Schrägen (3) an der Schmalseite (2) versehen wird und sich dadurch die Umfangslänge der Wärmedämmplatte (1) einseitig derart ändert, dass der Folienüberstand nach dem Verschweißen der Folie oberhalb oder unterhalb der Mitte (6) der Schmalseite (2) liegt.

7. Verwendung der Vakuumisolationspaneele gemäß einem der Ansprüche 1 bis 4 in Transportbehältern, Kühlschränken und flächigen Anwendungen wie Fassadenelementen oder Fußböden.

## Claims

1. A vacuum insulation panel comprising a thermally insulating plate (1) with an areal topside and underside and a narrow side (2) each, in an enclosure (4) comprising a metal-containing film, with a subatmospheric pressure prevailing in the enclosure and the enclosure surrounding the thermally insulating plate (1) in a vacuum-tight manner and the enclosure (4) having, on the narrow side (2), a weld seam (5) with a projecting section of the foil, and the narrow sides (2) being beveled and the vacuum insulation panel being in the form of a parallelepiped, **characterized in that** the weld seam (5) with the projecting section of foil is arranged in such a manner that it allows the vacuum insulation panels to be assembled without gaps to form an insulating enclosure, the seam being located above or below the center (6) of the narrow side (2) of the thermally insulating plate (1).

2. The vacuum insulation panel as claimed in claim 1, **characterized in that** the transition from the topside or underside to the respective narrow side (2) has an edge with an angle of from 10° to 70° in combination with an angle of from 170° to 110°, particularly preferably an angle of 45° in combination with an angle of 135°.

3. The vacuum insulation panel as claimed in claim 2, **characterized in that** the thermally insulated plate (1) consists of an open-cell, organic and inorganic foam, a fiber material or preferably a microporous insulating material.

4. The vacuum insulation panel as claimed in one of claims 1 to 3, **characterized in that** the metal-containing film is a composite foil having one or more metallized layers or a composite foil having a layer of metal, preferably aluminum.

5. A container or areal application which is **characterized in that** it includes vacuum insulation panels as claimed in one of claims 1 to 4, which have been joined together without gaps.

6. A process for producing a vacuum insulation panel as claimed in one of claims 1 to 4, in which a thermally insulating plate (1) with an areal topside and underside and a narrow side each is introduced into a gastight apparatus between two foil blanks, is evacuated to pressures of from 0.05 - 100 mbar, and the foil blanks are sealed to one another on all sides, or is introduced into a gastight apparatus, into a foil pouch which has been prefabricated from a top foil and bottom foil and has at least one open side, and the foil pouch is then evacuated to pressures of from 0.05 - 100 mbar and sealed in a gastight manner on the open side, **characterized in that** the thermally insulated plate (1) is provided with bevels (3) on the narrow side (2) and as a result the length of the periphery of the thermally insulating plate (1) changes on one side in such a manner that after the foil has been welded, the projecting section of foil lies above or below the center (6) of the narrow side (2).

7. The use of the vacuum insulation panels as claimed in one of claims 1 to 4, in transport containers, refrigerators and areal applications, such as facade elements or floors.

## Revendications

1. Panneau isolant sous vide, du type comprenant une plaque d'isolation thermique (1) avec une face supérieure et une face inférieure surfacique ayant chacune un chant (2) dans une enveloppe (4) constituée d'une feuille contenant un métal, une dépression régnant dans l'enveloppe et l'enveloppe enserrant la plaque d'isolation thermique (1) de manière étanche au vide et l'enveloppe (4) comportant sur le chant (2) une soudure (5) de laquelle dépasse la feuille, et les chants (2) étant biseautés et le panneau isolant sous vide ayant la forme d'un parallélépipède, **caractérisé en ce que** la soudure (5) avec la feuille en dépassant est disposée de manière à permettre l'assemblage sans espace des panneaux isolants sous vide par rapport à une enveloppe isolante, et qu'elle se situe au-dessus ou en dessous du centre (6) du chant (2) de la plaque d'isolation thermique (1).

2. Panneau isolant sous vide selon la revendication 1, **caractérisé en ce que** la transition entre la face supérieure ou inférieure et le chant (2) respectif comporte une arête formant un angle de 10° à 70° en combinaison avec un angle compris entre 170° et 110°, une préférence particulière étant accordée à un angle de 45° en combinaison avec un angle de 135°.

3. Panneau isolant sous vide selon la revendication 2, **caractérisé en ce que** la plaque d'isolation thermique (1) est réalisée en une mousse organique et minérale à pores ouverts, en fibres ou de préférence en un matériau isolant microporeux.

4. Panneau isolant sous vide selon l'une quelconque des revendications 1 à 3, **caractérisé en ce que** la feuille contenant du métal est une feuille composite avec une ou plusieurs couches métallisées ou une feuille composite avec une couche en métal, de préférence en aluminium.

5. Récipient ou application surfacique, **caractérisée en ce qu'**elle contient des panneaux isolants sous vide assemblés sans joint selon l'une quelconque des revendications 1 à 4.

6. Procédé de réalisation d'un panneau isolant sous vide selon l'une quelconque des revendications 1 à 4, par lequel on place une plaque d'isolation thermique (1) avec une face supérieure et une face inférieure surfacique ayant chacune un chant dans un appareillage étanche aux gaz entre deux feuilles découpées aux dimensions souhaitées, on fait le vide à des pressions comprises entre 0,05 et 100 mbar et on scelle ensemble les feuilles découpées sur tous leurs côtés ou on introduit cette plaque d'isolation thermique dans un appareillage étanche aux gaz dans une feuille en forme de sachet préfabriqué à partir d'une feuille supérieure et d'une feuille inférieure et ayant au moins un côté ouvert et on fait ensuite le vide dans la feuille en forme de sachet à des pressions comprises entre 0,05 et 100 mbar et on la scelle de manière étanche aux gaz sur son côté ouvert, **caractérisé en ce que** la plaque d'isolation thermique (1) est munie de biseaux (3) sur son chant (2), ce qui modifie la longueur du périmètre de la plaque d'isolation thermique (1) sur une face de telle sorte que la feuille qui dépasse après soudage de la feuille se situe au-dessus ou en dessous du centre (6) du chant (2).

7. Utilisation des panneaux isolants sous vide selon l'une quelconque des revendications 1 à 4 dans des conteneurs de transport, des réfrigérateurs et des applications surfaciques telles que des éléments de façade ou des sols.
